# FASCICULE DE BREVET EUROPEEN

(11) **EP 3 458 263 B1**
(45) Date de publication et mention de la délivrance du brevet: **08.07.2020**
(21) Numéro de dépôt: 17732150.2
(22) Date de dépôt: 15.05.2017
(51) Int. Cl.: B32B 37/08, B32B 37/15, B29C 48/154, B29C 48/21, B05D 3/12, B65D 25/14

(54) **BANDE METALLOPLASTIQUE POUR EMBALLAGE ALIMENTAIRE RIGIDE ET PROCÉDÉ DE FABRICATION**
METALLOPLASTIKSTREIFEN FÜR EINE STARRE LEBENSMITTELVERPACKUNG UND HERSTELLUNGSVERFAHREN
METALLOPLASTIC STRIP FOR RIGID FOOD PACKAGING, AND MANUFACTURING PROCESS

(30) Priorité: 20.05.2016 FR 1654562
(43) Date de publication de la demande: 27.03.2019
(73) Titulaire: Constellium Neuf-Brisach, 68600 Biesheim (FR)
(72) Inventeur: NEEL, Olivier, LA MURETTE 38140 (FR); VASSEL, Alain, 38960 SAINT ETIENNE DE CROSSEY (FR); GRINDATTO, Bernard, 38680 PONT EN ROYANS (FR)
(74) Mandataire: Constellium - Propriété Industrielle
(86) Numéro de dépôt international: PCT/FR2017/051166
(87) Numéro de publication internationale: WO 2017/198936

(56) Documents cités:
- WO-A1-2006/045017
- WO-A1-2011/009024
- WO-A1-2013/143628

## Description

### Domaine de l'invention

L'invention concerne le domaine des bandes métalloplastiques en alliage d'aluminium utilisées pour la préparation d'emballages alimentaires rigides et plus particulièrement le domaine des couvercles de boîte-boisson ou « beverage can ».
L'invention porte également sur un procédé de préparation de bandes métalloplastiques obtenues par co-extrusion sur un substrat en alliage d'aluminium.

### Etat de la technique

Les bandes métalliques utilisées pour la fabrication d'emballages alimentaires rigides sont généralement obtenues par application d'un vernis liquide sur une bande en alliage d'aluminium. Ce vernis liquide est ensuite séché ou cuit afin d'obtenir un revêtement.
Les vernis utilisés à ce jour présentent des compositions chimiques complexes que les opérations de cuisson et de séchage viennent encore modifier. Par ailleurs, ces étapes de séchage ou de cuisson altèrent significativement les propriétés mécaniques du substrat en alliage d'aluminium.

Dans le cas particulier des couvercles de boîte-boisson, des contraintes supplémentaires imposées par les industriels de l'alimentaire impliquent de réaliser les opérations de mise en forme sans recourir à une lubrification externe appliquée sur le vernis. La raison avancée tient au caractère néfaste de ces lubrifiants sur les propriétés d'usage de certains produits. L'un de ces caractères néfastes concerne l'aptitude de la bière à former une mousse stable et abondante.

L'innocuité pour la santé des consommateurs de certains composants présents, comme des traces de précurseurs ou des coproduits de réaction, est régulièrement mise en cause par diverses études (1) (2) (3) qui ont amené à faire évoluer la règlementation en vigueur, conduisant au remplacement des emballages alimentaires par des emballages de nouvelles générations.

L'une des alternatives aux emballages vernis, utilisée pour la fabrication de couvercles de boîte-boisson, consiste à remplacer le vernis par un revêtement polymérique. Cette solution mise en œuvre dans le passé par Crown et Hoogovens (4) consiste en la formation d'un complexe métalloplastique obtenu par le dépôt d'un film de polyéthylène téréphtalate, ou PET, sur une bande en alliage d'aluminium.
Malgré son intérêt, cette méthode présente l'inconvénient de recourir à une lubrification externe à base de dérivés paraffiniques pour la fabrication de couvercles de boîte-boisson.
- De façon similaire la société Toyo Seikan utilise un complexage d'aluminium et de films de PET (5) pour la fabrication de corps de boîte-boisson. Toutefois, les produits obtenus selon cette méthode n'ont pas connu de développement commercial. Ils seraient difficilement transformables et nécessiteraient une lubrification externe et seraient donc peu adaptés à la fabrication de couvercles de boîte-boisson.

Des produits revêtus obtenu par extrusion de polypropylène, PP, sur métal existent industriellement mais dans des domaines d'applications différents de ceux des emballages alimentaires rigides. Les films de polymère épais, de l'ordre de plusieurs mm, sont utilisés pour des applications en architecture ; alors que le dépôt sur métal mince, d'épaisseur inférieure à 100 µm, est généralement utilisé pour la fabrication d'emballages flexibles.
Aucun de ces produits ne permet une mise en forme ultérieure comme c'est le cas dans le domaine de l'emballage rigide, notamment pour la fabrication de couvercles de boîte-boisson qui nécessite des opérations d'emboutissage à des cadences élevées, de l'ordre de 100 coups par minute ou plus sur des presses.

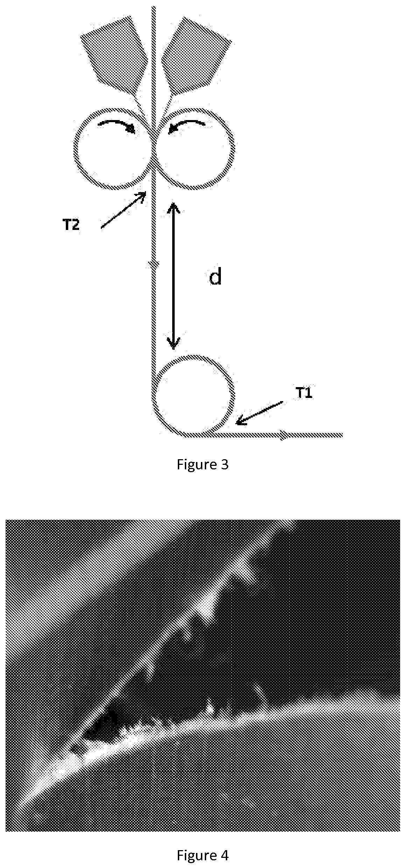

Il est connu de la demande WO 2013/143628 A1, Borealis AG, d'utiliser des bandes métalloplastiques pour la préparation d'emballages alimentaires. Ces bandes métalloplastiques sont par exemple obtenues par enduction sur un substrat d'alliage d'aluminium d'une première couche d'adhésion composée de PP modifié par de l'anhydride maléique et d'une seconde couche de surface en PP comprenant des agents de glissement non-migrants et des agents de blocage. Toutefois, les propriétés de dureté, d'épaisseur du métal et du revêtement ainsi que les propriétés d'adhésion, de rugosité et de frottement de la bande métalloplastique ne démontrent pas la possibilité de préparer industriellement des couvercles de boîte-boisson.
La préparation de couvercle de boîte-boisson requiert en effet de contrôler précisément l'ensemble de ces paramètres, afin de pouvoir transformer la bande métalloplastique dans les chaînes de fabrications sans modifications notables pour le fabricant, c'est-à-dire autre que des réglages de routine, sur les outils de fabrication des clients et sans recourir à une lubrification externe déposée sur le revêtement après son application.
Un second critère important consiste à pouvoir obtenir une rupture nette du film lors de l'ouverture du couvercle. Or cette rupture nette n'est réalisable que si un compromis judicieux est obtenu entre la souplesse du revêtement, requise pour les opérations de mise en forme et la fragilité nécessaire pour que l'ouverture de l'incision conduise à une rupture nette dans le revêtement. La Figure 4 illustre le phénomène lié à une rupture imparfaite du film de polymère, en raison de sa plasticité.

A ce jour, aucun revêtement de substitution aux vernis utilisés dans la fabrication d'emballage métallique rigide, n'a été développé et encore moins industrialisé de façon satisfaisante. Aucun fabricant n'étant parvenu à développer une technologie adaptée à la préparation d'emballages alimentaires rigides, notamment des couvercles de boîte-boisson, sans avoir recours à l'utilisation de solvants ou de lubrifiants externes.

Il existe ainsi un besoin non satisfait de l'industrie de l'emballage pour un revêtement amélioré adapté aux contraintes des procédés industriels de fabrication d'emballages métalliques rigides tels que les couvercles pour boîte-boisson et présentant de meilleures performances que les vernis, en termes d'empreinte environnementale et sanitaire et facilement industrialisable.

On notera que tous les alliages d'aluminium dont il est question dans ce qui suit sont désignés, sauf mention contraire, selon les désignations définies par l'« Aluminum Association » dans les « Registration Record Series » qu'elle publie régulièrement.
Les définitions des états métallurgiques sont indiquées selon la norme européenne EN 515.

Les inventeurs ont apporté une solution aux besoins sus mentionnés en proposant une bande métalloplastique adaptée aux contraintes de fabrication des emballages rigides alimentaires, notamment pour la fabrication des couvercles desdits emballages et plus particulièrement, les couvercles de boîte-boisson.

Les bandes métalloplastiques selon l'invention sont obtenues selon un procédé d'enduction d'un substrat en alliage d'aluminium par des compositions à base de polypropylène appliquées par co-extrusion, permettant d'obtenir un revêtement qui présente des propriétés satisfaisantes en termes d'adhésion sur le substrat métallique et de propriétés de lubrification.
Les bandes métalloplastiques ainsi obtenues sont adaptées à la réalisation de couvercles d'emballage rigide, en continu, sans apport de lubrification externe et sans modification des outils de mise en forme autre qu'un réglage des positions des outils.

L'un des objets de l'invention concerne ainsi un procédé de préparation de bandes métalloplastiques obtenues par enduction sur un substrat en alliage d'aluminium des séries AA3000 ou AA5000 à l'état métallurgique H19 ou H39 et ayant une épaisseur comprise entre 150 et 270 µm, de préférence comprise entre 205 et 213 µm, comprenant les étapes de :
a) enduction par (co-)extrusion à une température comprise entre 250 et 280°C, d'une couche d'adhésion en polypropylène modifié par de l'anhydride maléique sur chacune des faces dudit substrat en alliage d'aluminium et d'une couche de surface en polypropylène comprenant au moins un agent de glissement, recouvrant au moins l'une desdites couches d'adhésion, afin de former une bande métalloplastique ;
b) calandrage de ladite bande métalloplastique pour obtenir une épaisseur totale de l'ensemble des couches d'adhésion et de surface d'une épaisseur comprise entre 4 et 20 µm par face ; selon le mode le plus commun, l'épaisseur de polymères sur la face extérieure est de l'ordre de 5 à 15 µm, préférentiellement de 5 à 10 µm et préférentiellement, l'épaisseur sur la face intérieure est de l'ordre de 5 à 15 µm ;
c) traitement thermique de ladite bande métalloplastique à une température de bande comprise entre 120 et 160°C et de préférence entre 130 et 140 °C ;
d) refroidissement de la bande métalloplastique, afin d'obtenir un état métallurgique H48 et un coefficient de frottement de 0,06 ou moins.

De façon optionnelle, le procédé peut comprendre une étape préalable de traitement de surface du substrat métallique tel qu'un dégraissage acide, une anodisation phosphorique et/ou une conversion chimique avant l'application des couches d'enduction. Les meilleures performances étant obtenues par l'application d'une couche de conversion phosphochromique (6).

La bande métalloplastique obtenue selon le procédé de l'invention comprend un revêtement d'enduction suffisamment souple, qui présente une très faible rugosité de surface permettant une excellente aptitude à être transformée. Le revêtement étant également suffisamment rigide afin de permettre une rupture franche de l'incision lors de l'ouverture du couvercle. Ces propriétés, combinées à l'état métallurgique de la bande métalloplastique, permettent d'obtenir d'excellentes propriétés de formabilité et rendent la bande métalloplastique selon l'invention particulièrement intéressante pour des opérations de mise en forme ultérieure et la fabrication de couvercle de boîte-boisson.

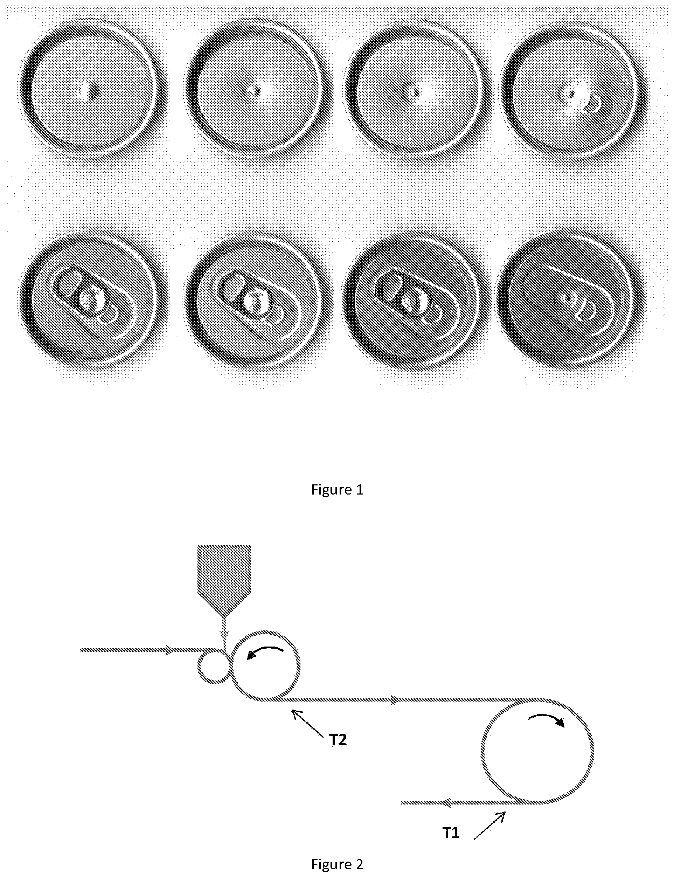

Selon un mode de réalisation de l'invention, la répartition des couches d'adhésion et de surface est sensiblement identique, ce qui peut être obtenu en pratique par le contrôle individuel du débit de matière de chaque vis d'alimentation de l'extrudeuse (Figures 2 et 3).

Selon un mode de réalisation, la couche de surface est appliquée sur les deux faces de la bande métalloplastique.

Selon un mode de réalisation particulièrement avantageux, la couche de surface comprend des agents antiblocages choisis dans le groupe contenant la silice, le talc et les silicates d'aluminium. De par ses propriétés, la silice est particulièrement appréciée comme agent antiblocage. De préférence l'agent antiblocage est utilisé en une teneur comprise entre 0,5 et 2 % en poids de la composition de la couche de surface.

Un autre objet de l'invention concerne un élément d'emballage alimentaire rigide, ou encore un couvercle de boîte-boisson, réalisé à partir d'une bande métalloplastique telle que précitée. La face extérieure des emballages alimentaires rigides correspondant à la face enduite d'une couche adhésive et la face intérieure, en contact avec le contenant, étant revêtue des couches d'adhésion et de surface.

### Description des figures

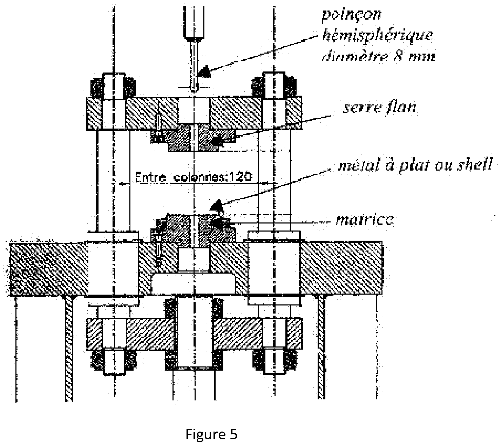

**La** **Figure 1** représente un couvercle de boîte-boisson lors des différentes étapes de mise en forme.
**La** **Figure 2** représente un procédé d'enduction selon l'invention par co-extrusion sur une face de la bande métallique. Dans ce procédé l'autre face doit être enduite lors d'une seconde étape.
**La** **Figure 3** représente le procédé d'enduction selon l'invention par co-extrusion sur les deux faces de la bande métallique.
**La** **Figure 4** illustre la rupture imparfaite du film et les filaments de polymère associé ou "crazing".
**La** **Figure 5** représente un schéma du dispositif du test d'expansion hémisphérique.

### Description détaillée de l'invention

Les inventeurs ont mis au point un procédé de fabrication de bandes métalloplastiques, en alliage d'aluminium, revêtues par un matériau polymère à base de polypropylène, déposé par co-extrusion. Ledit procédé permet d'optimiser les caractéristiques des bandes métalloplastiques afin de les rendre particulièrement adaptées à la fabrication d'emballages alimentaires rigides tels que la fabrication de couvercles de boîte-boisson.

Le procédé selon l'invention peut comprendre avant l'étape d'enduction une étape optionnelle de traitement thermique de la bande métallique en alliage d'aluminium à l'état métallurgique H19 ou H39 ou une étape de préchauffage de celle-ci à une température comprise entre 40 et 120°C, ou mieux encore entre 40 et 70°C. Le préchauffage peut être obtenu par l'utilisation d'une source de rayonnement infrarouge comme source de chaleur. L'étape de préchauffage est particulièrement intéressante car contrairement à un traitement thermique de la bande métalloplastique susceptible d'impacter négativement les propriétés mécaniques du produit final de par son action thermique sur le métal, le préchauffage ne modifie pas l'état métallurgique de la bande métallique.
Le traitement thermique ou le préchauffage de la bande métallique, permet de faciliter le déroulage de la bande métallique d'alliage d'aluminium et d'améliorer la qualité des couches d'enduction et en particulier celle de la couche de surface. Selon une hypothèse avancée par les inventeurs, le préchauffage de la bande contribuerait également à une meilleure recristallisation du polypropylène des couches d'enduction et de contribuer à l'obtention d'un meilleur état de surface.

L'étape a) d'enduction de composés polymères à la surface de la bande métallique à l'état métallurgique H19 ou H39 peut être obtenue avec ou sans le concours de lubrifiants externes. Il reste toutefois préférable de ne pas avoir recours à une lubrification externe qui pourrait avoir un effet néfaste sur les caractéristiques du produit emballé. L'enduction est effectuée par (co-)extrusion d'une première couche d'adhésion composée essentiellement de polypropylène modifié par l'anhydride maléique et appliquée à une température comprise entre 250 et 280°C. La couche d'adhésion est appliquée sur chaque face du substrat métallique.
Simultanément, une couche de surface est appliquée par co-extrusion avec la couche d'adhésion. La couche de surface comprenant du polypropylène, un agent de glissement et d'éventuels autres additifs.
La couche de surface doit être appliquée sur la couche d'adhésion d'au moins l'une des faces de la bande métalloplastique. Cette couche de surface peut également être appliquée sur les deux faces de la bande métalloplastique. Dans le cas illustré à la Figure 2, deux passes sont nécessaires pour obtenir un revêtement sur les deux faces de la bande métallique.

L'étape b) de calandrage permet d'ajuster l'épaisseur finale de la bande métalloplastique et de définir l'état de surface de la bande métalloplastique.

L'étape c) de traitement thermique permet de maintenir la température de la bande métalloplastique à une température T2 (Figures 2 et 3). Le choix de la température ainsi que la durée du maintien en température est variable et dépend de la bande métalloplastique et du mode de réalisation. Cette étape permet d'améliorer l'adhésion du revêtement sur le substrat métallique. La température de la bande métalloplastique est maintenue à une température modérée, soit inférieure à 200°C, typiquement de l'ordre de 120 à 160°C pendant une durée de maintien en température comprise entre quelques secondes et plusieurs minutes, typiquement inférieure à 20 secondes et de préférence de une à deux secondes. Il apparait en effet que l'état de surface se dégrade en fonction de la durée du traitement thermique. Cette étape permet de contrôler la recristallisation du polypropylène ainsi que la migration des additifs vers la surface de la bande métalloplastique et contribue à améliorer les propriétés tribologiques de la surface de la bande métalloplastique et de diminuer son coefficient de frottement. Selon un mode de réalisation illustrée à la Figure 2, un dispositif selon l'invention est adapté de telle sorte que le cylindre de refroidissement se limite à ramener la bande à une température modérée T2 suffisamment basse pour figer la surface, mais suffisamment élevée pour laisser à la couche d'adhésion le temps de réagir. Dans un second mode de réalisation illustré à la Figure 3, une co-extrusion simultanée sur les deux faces, permettant ainsi de minimiser le refroidissement de la bande à la température T2 à la sortie des rouleaux d'appui.

L'étape d) de refroidissement peut-être réalisée à l'air libre ou par trempe selon la vitesse de refroidissement désirée, afin d'obtenir un meilleur état de surface, c'est-à-dire sans marbrures sur la bande, révélateur d'un refroidissement hétérogène, il est préférable de réaliser un refroidissement à l'air libre. Ce dispositif est illustré à la Figure 2 où le refroidissement peut être assuré par un rouleau permettant de réduire la température de la bande à une température finale T1. Le refroidissement peut également être obtenu à l'aide d'un bac de trempe à l'eau permettant le refroidissement définitif de la bande métalloplastique ainsi obtenue.
Selon le mode de réalisation illustré aux Figures 2 et 3, il suffit de disposer d'une distance « d » adaptée, entre la sortie des rouleaux et le dispositif de refroidissement final pour permettre de réduire la température la bande d'une température T2 à la température T1, pour assurer à pleine vitesse de la ligne de production, un temps suffisant pour assurer l'adhésion sur la bande métallique. Le refroidissement par trempe dans l'eau, ne modifie pas de façon significative les valeurs du coefficient de frottement de la bande métalloplastique et présent l'avantage d'éviter que le polymère de la couche de surface n'adhère en surface.

Suite aux opérations de traitement thermique et de refroidissement, la bande métalloplastique est à l'état métallurgique H48 tel que défini par la norme européenne EN 515.
Selon cette dernière, l'état métallurgique H48 correspond à des matériaux obtenus après restauration et vernissage et H19 après simulation de cuisson correspondant à des matériaux obtenus après laminage à froid et après simulation de cuisson des vernis à 205°C pendant 20 min.

L'état métallurgique H48 permet en particulier, de garantir la mise en forme du métal pour fabriquer des couvercles pour boite boisson.

Le procédé de l'invention permet la réalisation industrielle de composés métalloplastiques présentant des propriétés mécaniques améliorées, ou ayant une épaisseur de métal plus fine pour un même niveau de performance que les bandes métalliques vernis.

Le substrat métallique utilisé pour la fabrication de bandes métalloplastiques est une bande en alliage d'aluminium AA3000 ou AA5000 dont l'épaisseur varie de 150 à 270 µm, de préférence l'épaisseur du substrat est comprise entre 150 à 230 µm et de façon encore plus préférentielle, comprise entre 200 à 215 µm. Dans le cas de conserves alimentaires, l'épaisseur est typiquement comprise entre 150 et 190 µm.

L'obtention de l'état H48 pour une épaisseur comprise entre 200 et 215 µm est particulièrement difficile avec les procédés selon l'art antérieur. Selon un mode de réalisation particulièrement favorable, le substrat est un alliage d'aluminium AA3004, AA3104, AA3005, AA3207, AA5042, AA5052, AA5182, ou AA5006.

Les couvercles de boîte-boisson réalisés à partir de la bande métalloplastique selon l'invention présentent d'excellentes caractéristiques en termes d'adhésion du revêtement polymérique sur le substrat métallique, de porosité du revêtement, de rupture de film lors de l'ouverture de l'incision, avec notamment des conditions de rupture franche du revêtement polymérique composé des couches d'adhésion et de surface.

Au sens de la présente invention, la bande métalloplastique est une bande comprenant un substrat métallique, notamment en alliage d'aluminium et comprenant sur au moins l'une de ses faces un revêtement appliqué par enduction, le revêtement étant un revêtement polymérique qui correspond à la couche d'adhésion et à la couche de surface, et sur l'autre face au moins une couche d'adhésion.

La couche d'adhésion est une couche appliquée directement sur le substrat métallique en alliage d'aluminium. Cette couche permet d'obtenir une bonne adhésion sur le substrat et permet également une bonne adhésion de la couche de surface lorsqu'elle est appliquée par co-extrusion.
La couche d'adhésion est composée d'une résine de polypropylène modifiée par de l'anhydride maléique. Ce composé permet d'obtenir une adhérence satisfaisante du revêtement sur le substrat. On peut citer à titre d'exemple de produits commerciaux l'OREVAC® 18751 (ARKEMA).
Les résines de polypropylène modifiées par de l'anhydride maléique présentent l'intérêt de pouvoir être facilement extrudé sur le substrat en alliage d'aluminium. Cela permet, par exemple, d'appliquer la résine de polypropylène modifiée par de l'anhydride maléique directement sur le substrat métallique sans recourir à un traitement thermique spécifique. Selon un mode de réalisation, il est possible d'appliquer la résine de polypropylène modifiée par de l'anhydride maléique sur la bande métallique chaude simplement en différant le refroidissement de la bande métallique. Cela permet de se dispenser d'un traitement thermique postérieur à l'application du revêtement polymérique par co-extrusion.

La couche de surface est appliquée par co-extrusion avec la couche d'adhésion sur le substrat métallique. La couche de surface forme un film permettant d'obtenir un revêtement homogène et peu rugueux à la surface du complexe métalloplastique. A titre d'exemple de polypropylène commerciaux, on peut citer le WG350C (BOREALIS), le Daploy™ WF420HMS, les ADMER® Extrusion Coating Grades notamment le AT2059E -PP (MITSUI CHEMICALS) ou encore le MONTELL PF611 (LYONDELLBASELL).
La couche de surface contient également des agents de glissement qui permettent de réduire le coefficient de friction de la bande métalloplastique. Elle peut également comprendre des additifs optionnels tels que des agents antiblocages utilisés comme additifs destinés à améliorer la formabilité du complexe métalloplastique notamment en réduisant les frottements relatifs entre le revêtement et les outils de mise en forme.

Par agent de glissement on entend un additif permettant de réduire le coefficient de frottement. Le coefficient de frottement étant une valeur indicative de l'effort nécessaire à fournir pour déplacer un objet sur une surface plane. Plus la valeur du coefficient de frottement est élevée et plus les frottements sont importants. Le coefficient de frottement est mesuré à l'aide d'un tribomètre Altek 9505A de la société Alek.
Parmi les agents de glissement destinés à améliorer la formabilité du complexe métalloplastique on peut citer de manière non exhaustive les polysiloxanes, typiquement des polydiméthylsiloxanes (PDMS) de haut poids moléculaire utilisés seuls ou en mélange et commercialisés sous les références MB 50-001 (MULTIBASE) ou POLYBATCH® ILPE 10020 et IL 100200 SC (A. Schulman).
De préférence L'agent de glissement et utilisé en une teneur comprise entre 2 et 20 % en poids de la composition de la couche de surface. De façon encore plus avantageuse, l'agent de glissement est composé d'un mélange de 10 % en poids de MB 50-001 et de 6 % en poids de MM Polybatch ILPE 10020 le % en poids étant exprimé par rapport à la composition de la couche de surface.

La couche de surface appliquée sur la face intérieure de l'emballage alimentaire rigide permet d'avoir une surface avec le contenant qui ne présente pas les désavantages des vernis en termes d'innocuité pour la santé ou de caractéristiques néfastes par rapport aux produits.

Les emballages alimentaires rigides selon l'invention sont obtenus par emboutissage d'une bande métalloplastique telle que décrite précédemment (Figures 2 et 3), la face comprenant les couches d'adhésion et de surface formant la face intérieure des emballages alimentaires.

Au sens de la présente invention, par face extérieure on entend la face de l'emballage rigide en contact avec l'extérieur et par face intérieure on entend la face interne de l'emballage rigide en contact avec le contenant de l'emballage.

Dans ses détails, l'invention sera mieux comprise à l'aide des exemples ci-après, qui n'ont toutefois pas de caractère limitatif.

### Exemples

### Mesures

Le coefficient de frottement est mesuré par un tribomètre Altek 9505A.
Le coefficient de friction correspond au ratio de la force de traction par le poids du mobile correspondant à l'entretien du mouvement dans le sens du laminage.
Le tribomètre consiste en un plateau horizontal sur lequel est positionné un échantillon de la bande métalloplastique. Un mobile de 2 kg reposant sur trois billes d'acier de 16 mm de diamètre est positionné sur la surface de l'échantillon. Le mobile est relié par un câble à un capteur de pression lequel mesure les forces de frottement qui s'opposent au déplacement du mobile. Le ratio de la force de friction mesurée / poids du mobile (2kg) permet de déterminer la valeur du coefficient de frottement.

La formabilité est déterminée par le test de l'Aquila (Figure 5). Il s'agit d'un test d'expansion hémisphérique qui permet de mesurer les caractéristiques d'expansion biaxiale d'une bande pour couvercles.

Le test de l'Aquila permet de mesurer la profondeur d'emboutissage par un poinçon hémisphérique au moment auquel on observe la rupture du métal.
Ce test consiste à :
- Positionner la bande métalloplastique entre une matrice, de diamètre intérieur 8.8 mm et le serre-flan.
- enfoncer la bande métalloplastique à vitesse constante en utilisant un poinçon hémisphérique de diamètre 8 mm.

La force et la course sont enregistrées en continu et relevées à perforation de la bande puis comparées à différentes références de métal à une épaisseur donnée.

Les couvercles fabriqués sont également caractérisés en termes de porosité et d'ouverture de l'incision.

Le test de porosité est réalisé à partir d'une solution de sulfate de cuivre et permet de détecter la présence de porosité de vernis sur les incisions des couvercles des boites boisson. Ce test est réalisé sur un échantillon de 10 couvercles pour chaque référence.

Le test de porosité consiste à :
- Préparer une solution de sulfate de cuivre comprenant 50 g de sulfate de cuivre sous forme de cristaux dissous dans 950 g d'eau déminéralisée et ajouter 20 ml d'acide chlorhydrique à 36 M à la solution puis
- remuer à l'aide d'un agitateur,
- disposer dans une cuvette les couvercles à plat, face intérieure vers le haut et sans préparation préalable des couvercles telle que dégraissage ou rinçage.
- Emplir la cuvette de chaque couvercle de solution de sulfate de cuivre.
- Examiner le couvercle après 15 minutes d'immersion L'examen consistant à relever le nombre de piqures et de bulles formées ainsi que leur localisation le long de l'incision et sur les sites privilégiés de chaque couvercle.

### Exemple 1

L'Exemple 1 est réalisé selon les conditions de l'invention. La bande métalloplastique obtenue par enduction par co-extrusion sur les deux faces d'un substrat en alliage AA5182 de 220 µm d'épaisseur et d'état métallurgique H39, d'une couche d'adhésion et d'une couche de surface.

Composition de la couche d'adhésion : OREVAC 18751 (ARKEMA) Composition de la couche de surface :

| Composition de la | % en poids |
|---|---|
| WF420 HMS (Boréalis) | Qsp 100 % |
| ILPE 10020 (A. SCHULMAN) | 6 % |
| PDMS MB-50-001 (MULTIBASE) | 10 % |

La bande métalloplastique est obtenue par :
- Utilisation de bobineaux d'alliage d'aluminium AA5182 à l'état H39 en 220 µm de 800 mm de laize pour un poids total de 2000 kg ;
- préchauffage de la bande à l'aide d'une source infrarouge à une température de 40 à 45°C avant enduction par co-extrusion ;
- Enduction par co-extrusion, à une température d'environ 270°C, d'une couche d'adhésion OREVAC 18751 sur les deux faces de la bande métallique ;
- Calandrage de la bande métallique enduite, l'épaisseur totale de chaque couche d'adhésion est comprise entre 8 et 12 µm.
- Traitement thermique dans un four infrarouge d'une puissance nominale de 45 kW avec un temps de séjour de 7,5 s à une température air 170 °C et une température de la bande en sortie de 130 à 140 °C,
- Refroidissement par trempe dans un bain d'eau à 25°C.

L'épaisseur totale du revêtement est identique sur les deux faces de la bande métalloplastique. La couche de revêtement appliquée est de 11 g/ m² par face.
Le coefficient de frottement est de 0,06 (Altek 9505A) et l'état métallurgique H48.

La bande métallique ainsi obtenue a été utilisée sur une installation industrielle pilote pour la fabrication de couvercles de boîte-boisson par emboutissage.
Les outils de mise en forme ont été réglés afin d'obtenir une hauteur de bulbe en fin de première passe de réalisation du couvercle de 1,90 mm (Figure 1).

L'utilisation de la bande métalloplastique a permis de réaliser 400 couvercles en continu sur la presse (cadence d'emboutissage de 100 coups/ min.) et n'a donné lieu à aucun problème de fonctionnement, ni défaut observable sur les couvercles finis.

Les bandes obtenues selon l'invention sont conformes, 0notamment en ce qui concerne les performances mesurées sur les couvercles réalisés sur une ligne pilote à l'échelle industrielle, tant pour la presse d'ébauche, de fabrication d'une préforme, que pour la presse de conversion, de mise en forme du panneau avec l'incision, du rivet, et l'adjonction d'un anneau pour l'ouverture qui est ensuite riveté sur le couvercle, comme représenté à la Figure 1, et plus particulièrement, les dimensions des pièces obtenues et leur conformité aux tolérances géométriques imposées par les clients.

Les couvercles formés sont également exempt des défauts typiques tels que fissuration du rivet, corrosion sous l'incision, assurant une qualité conforme aux exigences des clients.

La robustesse en contexte industriel du procédé selon l'invention a été montré par la réalisation d'un certain nombre de couvercles exempts de défaut lors d'une fabrication en série à plus de 100 coups / minutes sur les presses, Des comportements spécifiques tout à fait positifs, notamment en matière d'adhésion du revêtement, de tenue à la stérilisation ou à la pasteurisation de l'emballage, de porosité du revêtement et de rupture du film polymère le long de l'incision lors de l'ouverture du couvercle ont été obtenus.

Les bandes selon l'invention permettent la réalisation en régime continu sur des presses industrielles de couvercles métalloplastiques par co-extrusion de PP sur un substrat en alliage d'aluminium sans recourir à une lubrification externe.

### Exemples comparatifs

Des essais complémentaires ont été réalisés en suivant le protocole de l'exemple 1.
En l'absence d'agent de glissement dans la couche de surface, le coefficient Altek est de 0.230 et ne permet pas la mise en forme de couvercle de boîte-boisson de façon satisfaisante.
En présence de 0.2 % en poids d'agent de glissement dans la couche de surface, le coefficient Altek est de 0.090 et ne permet pas la mise en forme de couvercle de boîte-boisson de façon satisfaisante

Dans un troisième essai réalisé selon le protocole défini à l'exemple 1 et pour lequel la bande métalloplastique obtenue est à l'état métallurgique H39, le coefficient Altek obtenu est de 0.90 et ne permet pas la mise en forme de couvercle de boîte-boisson de façon satisfaisante.

### REFERENCES

1. Environ Health Perspect., June 1995; 103(6): 608-612.
2. Journal of Chromatography A, Volume 1444, 29 April 2016, Pages 106-113
3. Trends in Analytical Chemistry, Volume 42, January 2013, Pages 99-124
4. Canmaking The Technology of Metal Protection and Decoration, T. A. Turner, 1998, ISBN: 978-1-4419-4743-7, pp 129-130
5. http://www.toyo-seikan.co.jp/e/product/for-beverage/can/atulc.html
6. Association pour le développement de l'aluminium anodisé ou laqué (adal) Vade-mecum laquage, Chap. 4, http://www.aluminium.fr/wp-content/uploads/2013/10/vademecum laquage.pdf

## Revendications

1. Procédé d'enduction d'un substrat en alliage d'aluminium des séries AA3000 ou AA5000 dans un état métallurgique H19 ou H39 et ayant une épaisseur comprise entre 150 et 270 µm comprenant les étapes de :
a) enduction par (co-)extrusion à une température comprise entre 250 et 280°C, d'une couche d'adhésion en polypropylène modifié par de l'anhydride maléique sur chacune des faces dudit substrat en alliage d'aluminium et d'une couche de surface en polypropylène comprenant au moins un agent de glissement, recouvrant au moins l'une desdites couches d'adhésion, afin de former une bande métalloplastique ;
b) calandrage de ladite bande métalloplastique pour obtenir une épaisseur totale de l'ensemble des couches d'adhésion et de surface à une épaisseur comprise entre 4 et 20 µm par face ;
c) traitement thermique de ladite bande métalloplastique avec une température de la bande comprise entre 120 et 160°C ;
d) refroidissement de la bande métalloplastique, afin d'obtenir un état métallurgique H48 et un coefficient de frottement de 0,06 ou moins.

2. Procédé d'enduction selon la revendication 1 **caractérisé en ce qu'**un traitement thermique de la bande métallique en alliage d'aluminium ou de préchauffage de ladite bande à une température comprise entre 40 et 120°C est effectué avant l'étape d'enduction.

3. Procédé d'enduction selon la revendication 1 ou 2 **caractérisé en ce que** le substrat en alliage d'aluminium est choisi parmi les AA5042, AA5052, AA5182, , AA5006, AA3004, AA3005, AA3104, AA3207.

4. Procédé d'enduction selon l'une des revendications précédentes, **caractérisé en ce que** la couche de surface est appliquée sur les deux faces de la bande métalloplastique.

5. Procédé d'enduction selon l'une des revendications précédentes, **caractérisé en ce que** la couche de surface comprend au moins un agent antiblocage choisi dans le groupe contenant la silice, le talc et les silicates d'aluminium ou leur combinaison.

6. Procédé d'enduction selon l'une des revendications précédentes, **caractérisée en ce que** l'agent antiblocage est de la silice à une teneur comprise entre 0,5 à 2 % en poids de la composition de la couche de surface.

7. Procédé d'enduction selon l'une des revendications précédentes **caractérisé en ce que** l'agent de glissement est un polysiloxane, préférentiellement du polydimethylsiloxane.

8. Procédé d'enduction selon l'une des revendications précédentes **caractérisé en ce qu'**il comprend une étape préalable de traitement de surface du substrat métallique tel qu'un dégraissage acide et/ou une anodisation phosphorique et/ou une conversion chimique.

9. Elément d'emballage alimentaire rigide réalisé à partir d'une bande métalloplastique laminée obtenue selon le procédé des revendications 1 à 8.

10. Elément d'emballage selon la revendication 9 **caractérisé en ce que** l'élément d'emballage est un couvercle d'emballage alimentaire rigide.

11. Couvercle d'emballage selon la revendication 10 **caractérisé en ce que** l'emballage est une boîte-boisson.

12. Couvercle selon les revendications 10 ou 11 **caractérisé en ce que** l'épaisseur de l'ensemble des couches d'adhésion et de surface de la face extérieure dudit couvercle, est de 5 à 10 µm.

13. Couvercle selon les revendications 10 à 12 **caractérisé en ce que** l'épaisseur de l'ensemble des couches d'adhésion et de surface de la face intérieure dudit couvercle est de 5 à 15 µm.

## Patentansprüche

1. Verfahren zum Beschichten eines Substrats aus einer Aluminiumlegierung der Serie AA3000 oder AA5000 in einem Werkstoffzustand H19 oder H39 und mit einer Dicke zwischen 150 und 270 µm mit den Schritten:
a) (Co-)Extrusionsbeschichten bei einer Temperatur zwischen 250 und 280°C einer Haftschicht aus mit Maleinsäureanhydrid modifiziertem Polypropylen auf jeder Seite des Aluminiumlegierungssubstrats und einer Oberflächenschicht aus Polypropylen, die mindestens ein Gleitmittel aufweist und mindestens eine der Oberflächenschichten bedeckt, um ein metalloplastisches Band zu bilden;
b) Kalandrieren des metalloplastischen Bandes, um eine Gesamtdicke aller Haft- und Oberflächenschichten mit einer Dicke zwischen 4 und 20 µm pro Seite zu erhalten;
c) Wärmebehandlung des metalloplastischen Bandes mit einer Bandtemperatur zwischen 120 und 160°C;
d) Kühlen des metalloplastischen Bandes, um einen Werkstoffzustand H48 und einen Reibungskoeffizienten von 0,06 oder weniger zu erhalten.

2. Beschichtungsverfahren nach Anspruch 1, **dadurch gekennzeichnet, dass** vor dem Beschichtungsschritt eine Wärmebehandlung des Metallbandes aus Aluminiumlegierung oder eine Vorwärmung des Bandes bei einer Temperatur zwischen 40 und 120°C durchgeführt wird.

3. Beschichtungsverfahren nach Anspruch 1 oder 2, **dadurch gekennzeichnet, dass** das Aluminiumlegierungssubstrat ausgewählt ist aus AA5042, AA5052, AA5182, AA5006, AA3004, AA3005, AA3104, AA3207.

4. Beschichtungsverfahren nach einem der vorhergehenden Ansprüche, **dadurch gekennzeichnet, dass** die Oberflächenschicht auf beide Seiten des metalloplastischen Bandes aufgebracht wird.

5. Beschichtungsverfahren nach einem der vorhergehenden Ansprüche, **dadurch gekennzeichnet, dass** die Oberflächenschicht mindestens ein Antiblockiermittel aufweist, ausgewählt aus der Gruppe enthaltend Siliziumoxid, Talk und Aluminiumsilikate oder eine Kombination daraus.

6. Beschichtungsverfahren nach einem der vorhergehenden Ansprüche, **dadurch gekennzeichnet, dass** das Antiblockiermittel Siliziumoxid mit einem Gehalt zwischen 0,5 und 2 Gew.-% der Zusammensetzung der Oberflächenschicht ist.

7. Beschichtungsverfahren nach einem der vorhergehenden Ansprüche, **dadurch gekennzeichnet, dass** das Gleitmittel ein Polysiloxan, vorzugsweise Polydimethylsiloxan ist.

8. Beschichtungsverfahren nach einem der vorhergehenden Ansprüche, **dadurch gekennzeichnet, dass** es einen vorausgehenden Schritt der Oberflächenbehandlung des Metallsubstrats umfasst, wie z.B. eine saure Entfettung und/oder eine Phosphorsäure-Anodisierung und/oder eine chemische Umwandlung.

9. Starres Lebensmittelverpackungselement, hergestellt aus einem gewalzten metalloplastischen Band, das nach dem Verfahren der Ansprüche 1 bis 8 gewonnen wird.

10. Verpackungselement nach Anspruch 9, **dadurch gekennzeichnet, dass** das Verpackungselement ein starrer Lebensmittelverpackungsdeckel ist.

11. Verpackungsdeckel nach Anspruch 10, **dadurch gekennzeichnet, dass** die Verpackung eine Getränkedose ist.

12. Deckel nach Anspruch 10 oder 11, **dadurch gekennzeichnet, dass** die Dicke aller Haft- und Oberflächenschichten der Außenseite des Deckels 5 bis 10 µm beträgt.

13. Deckel nach den Ansprüchen 10 bis 12, **dadurch gekennzeichnet, dass** die Dicke aller Haft- und Oberflächenschichten der Innenseite des Deckels 5 bis 15 µm beträgt.

## Claims

1. Method for coating a substrate made of an AA3000 or AA5000 series aluminium alloy in a H19 or H39 temper and having a thickness between 150 and 270 µm, comprising the steps of:
a) coating by (co-)extrusion at a temperature between 250 and 280°C, an adhesive layer made of maleic anhydride-modified polypropylene onto each face of said aluminium alloy substrate, and a surface layer made of polypropylene comprising at least one slip agent, covering at least one of said adhesive layers, so as to form a metalloplastic strip;
b) calendering said metalloplastic strip so as to obtain an overall thickness of the set of adhesive and surface layers between 4 and 20 µm per face;
c) heat treating said metalloplastic strip with a strip temperature between 120 and 160°C;
d) cooling the metalloplastic strip so as to obtain a H48 temper and a coefficient of friction of 0.06 or less.

2. Coating method according to claim 1, **characterised in that** the metal strip made of aluminium alloy is heat treated or said strip is preheated to a temperature between 40 and 120°C before the coating step.

3. Coating method according to claim 1 or 2, **characterised in that** the aluminium alloy substrate is chosen from AA5042, AA5052, AA5182, AA5006, AA3004, AA3005, AA3104 and AA3207.

4. Coating method according to one of the preceding claims, **characterised in that** the surface layer is applied onto the two faces of the metalloplastic strip.

5. Coating method according to one of the preceding claims, **characterised in that** the surface layer comprises at least one anti-blocking agent chosen from the group containing silica, talc and aluminium silicates or a combination thereof.

6. Coating method according to one of the preceding claims, **characterised in that** the anti-blocking agent is silica, the content whereof is between 0.5 and 2 wt% of the composition of the surface layer.

7. Coating method according to one of the preceding claims, **characterised in that** the slip agent is a polysiloxane, preferentially polydimethylsiloxane.

8. Coating method according to one of the preceding claims, **characterised in that** it comprises a prior step of surface treating the metallic substrate such as acidic degreasing and/or phosphoric acid anodising and/or chemical conversion.

9. Rigid food packaging element made from a rolled metalloplastic strip obtained according to the method of claims 1 to 8.

10. Packaging element according to claim 9, **characterised in that** the packaging element is a rigid food packaging lid.

11. Packaging lid according to claim 10, **characterised in that** the packaging is a beverage can.

12. Lid according to claims 10 or 11, **characterised in that** the thickness of the set of adhesive and surface layers of the external face of said lid is from 5 to 10 µm.

13. Lid according to claims 10 to 12, **characterised in that** the thickness of the set of adhesive and surface layers of the internal face of said lid is from 5 to 15 µm.
